Europäisches Patentamt

European Patent Office

Office européen des brevets

(11) Publication number: 0 368 447
A1

## EUROPEAN PATENT APPLICATION

(21) Application number: 89308712.2

(22) Date of filing: 29.08.89

(51) Int. Cl.⁵: **B01D 67/00, B01D 69/08, B01D 69/12, B01D 53/22, B01D 61/02, D01D 5/24**

(30) Priority: 07.11.88 US 267979

(43) Date of publication of application:
16.05.90 Bulletin 90/20

(84) Designated Contracting States:
AT BE CH DE ES FR GB GR IT LI LU NL SE

(71) Applicant: BEND RESEARCH, INC.
64550 Research Road
Bend Oregon, 97701(US)

(72) Inventor: Babcock, Walter C.
19970 Tumalo Raod
Bend Oregon 97701(US)
Inventor: LaChapelle, Edward D.
60555 Sky Way
Bend Oregon 97702(US)
Inventor: McCray, Scott B.
Box 24 63415 Saddleback Place
Bend Oregon 97701(US)
Inventor: Krichko, Kris A.
19141 Fobert Road N.E.
Hubbard Oregon 97032(US)

(74) Representative: Skerrett, John Norton Haigh et al
H.N. & W.S. Skerrett Charles House 148/9
Great Charles Street
Birmingham B3 3HT(GB)

(54) Wet annealing of hollow fibers.

(57) A process for improving the internal burst strengths and gas and water permeabilities of certain microporous polymeric hollow fibers useful in fluid separations is disclosed, which comprises wet annealing such fibers.

EP 0 368 447 A1

## WET ANNEALING OF HOLLOW FIBERS

### BACKGROUND OF THE INVENTION

The use of lumen-side feed inside-skinned polymeric composite hollow fiber membranes for gas and fluid separations is known. In reverse osmosis (RO) applications, the internal burst pressures of the hollow fiber supports of such composite membranes constitute a critical factor in the performance of the fibers; in general, the higher the internal burst pressure of a given hollow fiber support, the better the RO performance of the composite membrane will be. In RO applications for desalination of sea water, for example, due to the high osmotic pressure of sea water itself, dynamic or operating pressures in the neighborhood of 800 psi are required. However, with conventional casting techniques, hollow fibers with operational burst strengths of only around 400 psi are obtainable. In addition, hollow fibers having high water and gas permeability are highly desirable in RO and gas separation applications, respectively.

There is therefore a need in the art for hollow fibers capable of greater operational internal burst pressures than are obtainable with conventional casting techniques. There is also a need in the art for hollow fibers having increased water and gas permeability. These needs and others are met by the process of the present invention.

### SUMMARY OF THE INVENTION

The present invention comprises a process for increasing both the internal burst pressures and the gas and water permeability of certain microporous polymeric hollow fibers comprising heating the same in hot water at a temperature of from $70°$ C to $160°$ C.

### DETAILED DESCRIPTION OF THE INVENTION

According to the present invention, it has been found that when microporous polymeric hollow fibers made from polysulfone (PS), polyethersulfone (PES), polyetherimide (PEI), and polyvinylidenefluoride (PVDF) are wet annealed, or heated in hot water at a temperature of from about $70°$ C to about $160°$ C, not only is there significant improvement in internal burst pressures, but also dramatic improvement in the water permeabilities of such treated fibers. Heating times may vary widely from as little as five minutes up to six hours.

### Examples 1-12

Microporous PES and PEI hollow fibers were prepared and tested for burst strength before and after wet annealing, and were also tested for gas and water permeability by conventional methods. The wet annealing was accomplished by immersing the fibers in a tank of hot water at the temperatures and for the times noted in Table I, with the results noted therein.

2

Table I

| Ex. | Fiber | Temp (°C) | Time Min. | Burst Pressure (psi) | | Water Permeability (gfd/psi) | | Air Permeability (SCFH/ft$^2$-100 psi) | |
|---|---|---|---|---|---|---|---|---|---|
| | | | | Before | After | Before | After | Before | After |
| 1 | PES** | -- | -- | 690 | 690 | 0.05 | 0.05 | 10 | 10 |
| 2 | PES | 70 | 30 | 690 | 780 | 0.05 | 0.3 | 10 | 300 |
| 3 | PES | 90 | 30 | 690 | 790 | 0.05 | 0.2 | 10 | 300 |
| 4 | PES | 100 | 30 | 690 | 780 | 0.05 | 0.6 | 10 | 460 |
| 5 | PES | 120 | 30 | 690 | 830 | 0.05 | 0.4 | 10 | 350 |
| 6 | PES | 140 | 30 | 690 | 820 | 0.05 | 0.2 | 10 | 170 |
| 7 | PEI** | -- | -- | 1260 | 1260 | 0.02 | 0.02 | 50 | 50 |
| 8 | PEI | 90 | 30 | 1260 | 1280 | 0.02 | 0.02 | 50 | 100 |
| 9 | PEI | 100 | 30 | 1260 | 1340 | 0.02 | 0.02 | 50 | 80 |
| 10 | PEI | 120 | 30 | 1260 | >1400* | 0.02 | 0.05 | 50 | 120 |
| 11 | PEI | 140 | 30 | 1260 | >1400* | 0.02 | 0.34 | 50 | 260 |
| 12 | PEI | 160 | 30 | 1260 | >1400* | 0.02 | 1.2 | 50 | 490 |

* Fiber did not burst at 1400 psi
** Not wet-annealed

## Examples 13-24

Similar tests were run on similarly-made PEI and PES fibers wet annealed at 90°C for varying times, with the results shown in Table II.

Table II

| Ex. | Fiber | Temp (°C) | Time Min. | Burst Pressure (PSI) | | Water Permeability (gfd/psi)* | | Air Permeability (SCFH/ft$^2$-100 psi) | |
|---|---|---|---|---|---|---|---|---|---|
| | | | | Before | After | Before | After | Before | After |
| 13 | PES* | -- | -- | 690 | 690 | 0.05 | 0.05 | 10 | 10 |
| 14 | PES | 90 | 15 | 690 | 780 | 0.05 | 0.5 | 10 | 370 |
| 15 | PES | 90 | 30 | 690 | 790 | 0.05 | 0.2 | 10 | 300 |
| 16 | PES | 90 | 45 | 690 | 780 | 0.05 | 0.5 | 10 | 430 |
| 17 | PES | 90 | 60 | 690 | 780 | 0.05 | 0.3 | 10 | 420 |
| 18 | PES | 90 | 120 | 690 | 780 | 0.05 | 0.6 | 10 | 420 |
| 19 | PEI* | -- | -- | 1260 | 1260 | 0.02 | 0.02 | 50 | 50 |
| 20 | PEI | 90 | 15 | 1260 | 1300 | 0.02 | 0.03 | 50 | 51 |
| 21 | PEI | 90 | 30 | 1260 | 1280 | 0.02 | 0.02 | 50 | 100 |
| 22 | PEI | 90 | 45 | 1260 | 1280 | 0.02 | 0.03 | 50 | 60 |
| 23 | PEI | 90 | 60 | 1260 | 1290 | 0.02 | 0.03 | 50 | 75 |
| 24 | PEI | 90 | 120 | 1260 | 1270 | 0.02 | 0.03 | 50 | 55 |

* Not wet annealed

Examples 25-36

PVDF fibers sold under the trade name KYNAR by Pennwalt Corporation of Philadelphia, Pennsylvania were wet-annealed at 95° C for 30 minutes and compared with identical non-wet-annealed fibers, with the results shown in Table III.

Table III

| | Burst Pressure | | Water Permeability | |
|---|---|---|---|---|
| | (psi) | | (gfd-psi) | |
| Ex. No. | Before | After | Before | After |
| 25* | 176 | 176 | 0.64 | 0.64 |
| 26 | 176 | 233 | 0.64 | 1.67 |

* Not wet-annealed

It will be appreciated that fibers wet annealed in accordance with the invention as hereinafter described are especially suited for use in providing composite membrane supports in membrane devices or apparatus for carrying out gas and fluid separation or reverse osmosis processes.

**Claims**

1. A process for increasing both the internal burst pressure and the gas and/or water permeability of a microporous polymeric hollow fiber made from a polymer selected from polysulfones, polyethersulfones, polyvinylidenefluorides and polyetherimides, said process characterized by heating said fiber in water at a temperature from 70° C to 160° C.

2. The product of the process of claim 1.

3. A membrane device for carrying out gas and fluid separations or reverse osmosis processes, said device comprising composite membrane supports formed by microporous polymeric hollow fibers made from a polymer selected from polysulfones, polyethersulfones, polyvinylidenefluorides and polyetherimides, characterized in that said fibers are wet annealed in accordance with the process claimed in Claim 1.

<table>
<tr><td rowspan="2">European Patent Office</td><td rowspan="2">EUROPEAN SEARCH REPORT</td><td>Application Number</td></tr>
<tr><td>EP 89 30 8712</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 215 549 (BEND RESEARCH INC.) * Whole document * --- | 1-3 | B 01 D 67/00<br>B 01 D 69/08<br>B 01 D 69/12<br>B 01 D 53/22<br>B 01 D 61/02<br>D 01 D 5/24 |
| Y | PATENT ABSTRACTS OF JAPAN, vol. 11, no. 202 (C-432)[2649], 30th June 1987; & JP-A-62 27 025 (TEIJIN LTD) 05-02-1987 * Abstract * --- | 1-3 | |
| X | PATENT ABSTRACTS OF JAPAN, vol. 10, no. 17, (C-324)[2074], 23rd January 1986; & JP-A-60 172 312 (TOYO BOSEKI K.K.) 05-09-1985 * Abstract * & CHEMICAL ABSTRACTS, vol. 104, no. 19, 12th May 1986, page 330, abstract no. 164766w, Columbus, Ohio, US --- | 1,2 | |
| X | PATENT ABSTRACTS OF JAPAN, vol. 11, no. 163 (C-424)[2610], 26th May 1987; & JP-A-61 293 502 (SUMITOMO BAKELITE CO. LTD) 24-12-1986 * Abstract * & CHEMICAL ABSTRACTS, vol. 106, no. 20, 17th May 1987, page 408, abstract no. 162632s, Columbus, Ohio, US --- | 1,2 | TECHNICAL FIELDS SEARCHED (Int. Cl.5)<br><br>B 01 D |
| X | PATENT ABSTRACTS OF JAPAN, vol. 12, no. 353 (C-530)[3200], 21st September 1988; & JP-A-63 111 907 (DAICEL CHEM. IND. LTD) 17-05-1988 * Abstract * --- | 1,2 | |
| X | EP-A-0 250 337 (RHONE-POULENC RECH.) * Abstract; claims 1,5,8,10; page 2, lines 38-47; page 3, lines 43,44 * --- -/- | 1,2 | |

The present search report has been drawn up for all claims

| Place of search | Date of completion of the search | Examiner |
|---|---|---|
| THE HAGUE | 23-11-1989 | HOORNAERT P.G.R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 291 679  (GKSS)(23-11-1988) * Abstract; page 3, lines 39-47; table 4 * | 1-3 | |
| P,X | WO-A-8 904 200  (UNION CARBIDE CORP.)(18-05-1989) * Abstract; claims 1-16; page 14, lines 2-30 * | 1-3 | |

TECHNICAL FIELDS
SEARCHED (Int. Cl.5)

The present search report has been drawn up for all claims

| Place of search | Date of completion of the search | Examiner |
|---|---|---|
| THE HAGUE | 23-11-1989 | HOORNAERT P.G.R.J. |

EPO FORM 1503 03.82 (P0401)